# EUROPÄISCHE PATENTSCHRIFT

(11) **EP 3 028 031 B1**
(45) Veröffentlichungstag und Bekanntmachung des Hinweises auf die Patenterteilung: **11.09.2019**
(21) Anmeldenummer: 14747518.0
(22) Anmeldetag: 30.07.2014
(51) Int. Cl.: G01N 21/15, G01B 9/02, G01N 21/47, G01N 21/90

(54) **VERFAHREN ZUR ERKENNUNG VON FREMDKÖRPERN ODER ANDEREN STREUZENTREN IN OPTISCH TRANSPARENTEN BEHÄLTERN**
METHOD FOR DETECTING FOREIGN BODIES OR OTHER SCATTERING CENTRES IN OPTICALLY TRANSPARENT CONTAINERS
PROCÉDÉ DE DÉTECTION DE CORPS ÉTRANGERS OU D'AUTRES CENTRES DE DIFFUSION DANS DES RÉCIPIENTS OPTIQUEMENT TRANSPARENTS

(30) Priorität: 31.07.2013 DE 102013012692
(43) Veröffentlichungstag der Anmeldung: 08.06.2016
(73) Patentinhaber: Fraunhofer-Gesellschaft zur Förderung der angewandten Forschung e.V., 80686 München (DE)
(72) Erfinder: RÖDER, Olaf, 01326 Dresden (DE); FISCHER, Björn, 09212 Limbach-Oberfrohna (DE); WOLF, Christian, 01259 Dresden (DE)
(74) Vertreter: Gagel, Roland
(86) Internationale Anmeldenummer: PCT/EP2014/002090
(87) Internationale Veröffentlichungsnummer: WO 2015/014488

(56) Entgegenhaltungen:
- EP-A1- 1 887 312
- DE-A1- 2 904 126
- DE-B3-102006 062 575
- DE-B4-102010 063 412
- ENEAS NICOLÁS MOREL ET AL: "Optical coherence tomography-based scanning system for shape determination, wall thickness mapping, and inner inspection of glass containers", APPLIED OPTICS, OPTICAL SOCIETY OF AMERICA, WASHINGTON, DC; US, Bd. 52, Nr. 9, 20. März 2013 (2013-03-20), Seiten 1793-1798, XP001580930, ISSN: 0003-6935, DOI: HTTP://DX.DOI.ORG/10.1364/AO.52.001793 in der Anmeldung erwähnt

## Beschreibung

### Technisches Anwendungsgebiet

Die vorliegende Erfindung betrifft ein Verfahren zur Detektion von Fremdkörpern oder anderen Streuzentren in gefüllten oder ungefüllten Behältern, die eine Behälterwand aus einem optisch transparenten Material aufweisen.

Bei der industriellen Befüllung von Behältern aus Glas oder einem anderen optisch transparenten Material, bspw. von Spritzen, Phiolen oder Getränkeflaschen in automatisierten Abfüllanlagen kann es zu mechanischem Abrieb, Absplitterungen sowie Materialbruch kommen. Dadurch können bspw. bei der Befüllung von Glasbehältern Glaspartikel in die Anlage gelangen und über Transport- und Manipulator-Einrichtungen somit auch in die Behälter, die auf der Anlage befüllt werden. Häufig sind diese Partikel nur sehr schwer im gefüllten Behälter erkennbar, weil sie oft sehr dünn sowie optisch transparent sind. Von diesen Partikeln gehen jedoch häufig Gefahren bei der Verwendung bzw. dem Verzehr der abgefüllten Produkte aus.

So ist es erforderlich, eventuelle Fremdkörper in Behältnissen für Impfstoffe und Impfstoffvorprodukte sicher auszuschließen. Auch das Inverkehrbringen von Getränkeflaschen, in denen Glaspartikel oder andere Verunreinigungen als Fremdkörper enthalten sind, muss durch geeignete Erkennungs- und Sortiermaßnahmen verhindert werden.

### Stand der Technik

Bisher sind zur Erfassung von Fremdkörpern in gefüllten optisch transparenten Behältern unterschiedliche Techniken bekannt. So können die Behälter mit optischer Strahlung durchleuchtet und eventuelle Fremdkörper in dem aufgezeichneten Durchleuchtungsbild erkannt werden. Eine weitere Technik setzt die in der Regel rotationssymmetrischen Behältnisse in Rotation und detektiert Schallsignale, die beim Auftreffen der Fremdkörper auf die Innenseite der Behälterwand entstehen. Schließlich ist es auch bekannt, die Behälter mittels Röntgenstrahlung zu durchleuchten, um über die aufgezeichneten Röntgenbilder entsprechende Fremdkörper im gefüllten Behälter erkennen zu können.

Die Veröffentlichung von Eneas Nicolas Morel, et al.: Optical coherence tomography-based scanning system for shape determination, wall thickness mapping, and inner inspection of glass containers. Applied Optics, Vol. 52, Nr. 9, S. 1793-1798 (2013) offenbart ein Fourier-Domain-OCT-System, mit dem die Form und die Wandstärke von Glascontainern sowie der Blasengehalt in deren Glaswänden erfasst werden können. Das Messobjekt ist auf einem um eine Achse drehbaren Tisch angeordnet und wird mittels eines translatorisch -in Richtung des Messobjekts und parallel zur Drehachse - bewegbaren Messkopfes untersucht.

Die Veröffentlichung von Hamid Hosseiny et al.: Characterization of PET forms using spectral domain optical coherence tomography, Proc. SPIE 8785, 8th Iberoamerican Optics Meeting and 11th Latin American Meeting on Optics, Lasers, and Applications, Porto, Portugal, 22. Juli 2013, 8785DT (18. November 2013) offenbart die Untersuchung der Schichtdicke einer Zwischenschicht in einem laminaren Aufbau einer Vorform für PET-Flaschen.

EP 2 290 318 A1 und DE 10 2010 063412 B4 zeigen Besselstrahlen als Messstrahlen für OCT-Verfahren.

Aus DE 10 2006 062575 B3 ist eine Vorrichtung und ein Verfahren zur Inspektion von Flaschenböden bekannt, bei dem eine Verschmutzung von Sichtfenstern dadurch vermieden wird, dass die Sichtfenster in einem Bereich außerhalb einer vertikalen Projektion der Flaschenböden angeordnet sind.

DE 29 04 126 A1 offenbart eine Vorrichtung zur Inspektion von Flaschenböden mit einer Lichtquelle, die in vertikaler Projektion unterhalb der zu inspizierenden Flasche angeordnet ist. Zwischen Lichtquelle und Flaschenboden ist eine Schutzscheibe aus Mattglas vorgesehen, die während des Betriebs rotiert und in einem zweiten Bereich von einer Reinigungseinrichtung immer wieder gesäubert wird.

Die Aufgabe der vorliegenden Erfindung besteht darin, ein Verfahren zur Detektion von Fremdkörpern oder anderen Streuzentren in gefüllten oder ungefüllten, optisch transparenten Behältern anzugeben, das keine ionisierende oder schädliche Strahlung erfordert und die Detektion von Fremdkörpern oder anderen Streuzentren unterschiedlicher Größe und Form sowie aus unterschiedlichen Materialien ermöglicht.

### Darstellung der Erfindung

Die Aufgabe wird mit dem Verfahren gemäß Patentanspruch 1 gelöst. Vorteilhafte Ausgestaltungen des Verfahrens sind Gegenstand der abhängigen Patentansprüche oder lassen sich der nachfolgenden Beschreibung sowie den Ausführungsbeispielen entnehmen.

Bei dem vorgeschlagenen Verfahren zur Erfassung von Fremdkörpern oder anderen Streuzentren in gefüllten oder ungefüllten Behältern, die eine Behälterwand aus einem optisch transparenten Material aufweisen, werden mittels optischer Kohärenztomographie (OCT) tomographische Daten wenigstens eines Volumenbereiches im Inneren der Behälter aufgezeichnet, in denen die Fremdkörper oder anderen Streuzentren dann erkennbar sind. Das Verfahren zeichnet sich dadurch aus, dass der Volumenbereich so gewählt wird, dass er wenigstens einen Bereich einer Innenseite der Behälterwand enthält, und dass für die Durchführung der optischen Kohärenztomographie ein optisches Messsystem mit einem Messstrahl und einem Referenzlichtstrahl eingesetzt wird, bei dem die reflektierende Oberfläche eines Referenzlichtspiegels, an dem der Referenzlichtstrahl reflektiert wird, die geometrische Form der Innenseite der Behälterwand im gewählten Volumenbereich aufweist

Das Verfahren nutzt die Technik der optischen Kohärenztomographie, um in den Behältern Fremdkörper bzw. Fremdkörperpartikel oder andere Streuzentren weitgehend unabhängig von deren optischen Eigenschaften sowie deren Form und Dichte zu erkennen. Das Prinzip beruht auf der Erkennung von Gradienten im Brechungsindex, z.B. an Grenzflächen der Fremdkörper am in der Regel homogenen, insbesondere viskosen oder pulverförmigen, Füllgut durch Lichtstreuung zwischen verschiedenen Materialien. Diese Grenzflächen sind in den tomographischen Daten erkennbar. So treten beispielsweise bei einem Tiefenscan an Streuzentren, wie sie auch Fremdkörper darstellen, Amplitudenmaxima auf, anhand derer die Streuzentren dann erkennbar sind. Auch in entsprechend aus den tomographischen Daten berechneten tomographischen Bildern lassen sich die Fremdkörper bzw. Streuzentren erkennen. Mit dem Verfahren lassen sich auch Fremdkörper bei lediglich geringfügig unterschiedlichen optischen Eigenschaften erkennen. Dabei können zum einen große Fremdkörperpartikel detektiert werden, von denen ein Teil der Partikeloberfläche in den Bilddaten oder einem daraus berechneten tomographischen Bild dargestellt wird. Zum anderen können auch Fremdkörperpartikel oder andere Streuzentren detektiert werden, die kleiner als die Auflösung des OCT-Messsystems von typischerweise 1 µm bis 20 µm sind, weil das Vorhandensein streuender Strukturen auch dann noch mittels optischer Kohärenztomographie detektiert werden kann. Unter einer Behälterwand aus einem optisch transparenten Material ist dabei eine Behälterwand zu verstehen, die in wenigstens einem Teilbereich des optischen Spektralbereiches (UV, VIS, IR) für die Strahlung zumindest teildurchlässig ist, in dem dann die optische Kohärenztomographie durchgeführt wird.

Bei dem vorgeschlagenen Verfahren wird auch ausgenutzt, dass sich die Fremdkörper bei der Abfüllung und/oder dem Transport der Behälter bevorzugt in bestimmten Bereichen des Behälters ansammeln, der in der Regel einen Behälterboden (untere Behälterwand), eine Behälteroberseite und eine seitliche Behälterwand aufweist, die den Behälterboden mit der Behälteroberseite verbindet. Die Behälteroberseite kann auch durch die Behälteröffnung gebildet sein. Üblicherweise sammeln sich die Fremdkörper im unteren Behälterbereich am Behälterboden, so dass der mittels optischer Kohärenztomographie aufgezeichnete Volumenbereich, im Folgenden auch als Messbereich des OCT-Messsystems bezeichnet, entsprechend vorzugsweise in diesen Bereich gelegt wird. Die Behälter werden nach der Abfüllung in der Regel stehend transportiert und dann in dieser Lage mit dem vorgeschlagenen Verfahren vermessen. Jedoch ist auch eine andere Lage der Behälter für den Einsatz des vorgeschlagenen Verfahrens jederzeit möglich.

In Abhängigkeit von der Behältergeometrie, der Konsistenz des Füllmediums sowie der Dichte und Form der Fremdkörper kann sich durch Rotation des Behälters auch ein anderer bevorzugter Aufenthaltsort der Fremdkörper einstellen, an dem dann die optische Tomographie angewendet wird. In einer Ausgestaltung des Verfahrens werden die Behälter vor der Aufzeichnung der tomographischen Daten zumindest zeitweise in Rotation versetzt. Dadurch wird bei flüssigem Füllgut je nach Masse und Viskositätsverhältnissen von Flüssigkeit und Fremdkörper eine Anlagerung der Fremdkörper an der Innenseite der seitlichen Behälterwand oder auch im Rotationszentrum am Behälterboden begünstigt. Der mittels optischer Tomographie vermessene Volumenbereich wird dann wiederum an dieser Stelle im Bereich der Innenseite der seitlichen Behälterwand oder des Behälterbodens gewählt.

Der Messbereich der optischen Tomographie wird auch unabhängig von einer zeitweisen Rotation des Behälters so gewählt, dass er wenigstens einen Bereich der Innenseite der Behälterwand enthält, insbesondere der Innenseite des Behälterbodens. Vorzugsweise folgt dieser Volumen- bzw. Messbereich der geometrischen Form der Innenseite des Behälterbodens an dieser Stelle des Behältnisses. Diese Anpassung an die Form der Behälterwand kann über geeignete optische Komponenten bei der Durchführung der optischen Kohärenztomographie realisiert werden. So lässt sich bspw. über eine nachführbare Optik der Fokusbereich des Messstrahls beim Abscannen des jeweiligen Behälterbereiches jeweils so nachführen, dass er dieser Form der Behälterwand folgt.

Mit dem vorgeschlagenen Verfahren lässt sich auch der gesamte Bereich an der Innenseite der unteren bzw. seitlichen Behälterwand erfassen. Der Messbereich des OCT-Systems wird dabei, wie bereits im vorangehenden Absatz angeführt, auf die Innenseite der unteren bzw. seitlichen Behälterwand gelegt und in Form und Lage so ausgeprägt, dass die zu untersuchende Behälterinnenseite vollständig erfasst werden kann.

Bei dem vorgeschlagenen Verfahren kann die Detektion bspw. durch Abscannen der entsprechenden Fläche mit dem Messstrahl in Kombination mit einem Fourier-Domain-OCT-System oder auch durch Erfassung mittels eines Flächendetektors mit einem sog. Full-Field-OCT erfolgen.

Aus den entsprechend aufgezeichneten tomographischen Daten, bspw. dem Amplitudenverlauf bei Tiefenscans (A-Scan) oder aus entsprechend aus den Daten berechneten zweidimensionalen tomographischen Schnittbildern oder einem aus diesen zweidimensionalen Schnittbildern zusammengesetzten 3D-Bild, können dann anhand der erkennbaren Grenzflächen die Fremdkörper oder auch andere Streuzentren identifiziert werden. Die Ergebnisübermittlung an eine Überwachungs- oder Datenstation zur weiteren Auswertung kann entweder in Form unprozessierter Rohdaten vom OCT-System, bereits vorprozessierter Daten, vorzugsweise bereits erzeugter Bilddaten, oder bereits ausgewerteter Daten erfolgen, die vorzugsweise bereits das Vorhandensein von Fremdkörpern oder anderen Streuzentren signalisieren. Die Übermittlung kann dabei jeweils über eine beliebige geeignete Schnittstelle erfolgen, beispielsweise über USB oder Ethernet.

Eine für das Verfahren ausgebildete Vorrichtung zur Detektion von Fremdkörpern oder anderen Streuzentren in gefüllten oder ungefüllten, optisch transparenten Behältern weist somit ein optisches Messsystem auf, das zur Durchführung optischer Kohärenztomographie ausgebildet ist. Derartige Messsysteme sind aus dem Stand der Technik grundsätzlich bekannt. Zumindest ein Teil dieses optischen Messsystems befindest sich in einem staubund feuchtigkeitsgeschützten Messmodul. In diesem Messmodul sind optische Komponenten zur Formung und Führung eines optischen Messstrahls für die Durchführung der optischen Kohärenztomographie angeordnet. Das Messmodul ist von einem staub- und feuchtigkeitsdichten Gehäuse umschlossen, das ein für den Wellenlängenbereich des Messstrahls optisch transparentes Messfenster für den Durchtritt des Messstrahls aufweist. Das Messfenster kann bspw. aus Glas, Quarzglas, Saphir oder einem optisch transparenten Kunststoff bestehen. Das Messmodul ist durch Bauart und Form vor Verschmutzungen geschützt sowie geeignet für den Einsatz bei gängigen Reinigungsprozessen. Dazu gehören auch Spül-, Reinigungs-, Desinfektions- und Sterilisationsprozesse, z. B. unter Verwendung von Wasserstoffperoxid (CIP-Verfahren; CIP: Cleaning in Place).

Je nach Ausgestaltung des optischen Messsystems zur Durchführung der optischen Kohärenztomographie umfasst das Messmodul auch ggf. eine Einheit zur Strahlpositionierung, z.B. mittels Strahlablenkung oder mittels einer Verfahreinheit für die Fokussieroptik. Auch weitere Komponenten des optischen Messsystems wie z. B. die Lichtquelle für den Messstrahl, der Detektor für die Detektion des am Messobjekt reflektierten Lichts, ein Interferometer zur Überlagerung des reflektierten Lichtes mit einem Referenzlichtstrahl sowie die Ansteuerung zur Strahlpositionierung können in diesem Modul angeordnet sein. Diese Bestandteile können aber auch separat in einem oder mehreren weiteren Modulen untergebracht sein, die dann über optische und/oder elektrische Daten- und Energieleiter miteinander verbunden sind. Die Messwerterfassung und - verarbeitung kann in einem separaten Modul basierend auf integrierter Rechentechnik, z. B. mindestens einem digitalen Signalprozessor oder einem FPGA (FPGA: Field-Programmable Gate Array) oder einem integrierten Personalcomputer, sowie extern erfolgen, z. B. durch einen Computer. Zur Erzeugung des Messstrahls kann eine kurzkohärente Strahlungsquelle mit einer Zentralwellenlänge im Bereich zwischen 300 nm und 2000 nm, besonders bevorzugt im Bereich zwischen 800 nm und 1300 nm eingesetzt werden. Das Messsystem selbst kann beispielsweise als Fourier-Domain-OCT oder als Full-Field-OCT ausgebildet sein.

Ein Fourier-Domain-OCT-System teilt hierbei das Licht der Lichtquelle in zwei Strahlenbündel auf, einen Messstrahl und einen Referenzstrahl. Der Messstrahl wird auf das Messobjekt gelenkt. Das vom Messobjekt zurück gestreute Licht wird mit dem Referenzlicht überlagert, das über einen Spiegel rückreflektiert wird, und spektroskopisch ausgewertet. Dabei kommt vorzugsweise eine Kombination aus Superlumineszenzdiode als Lichtquelle und Spektrometer als Detektor oder eine Kombination aus durchstimmbarem Laser und Photodetektor zum Einsatz. Eine Messung liefert dabei Informationen über die Tiefenstreuung im Messobjekt unter dem Messstrahl in dessen Ausbreitungsrichtung. Durch geeignete Ablenkungen des Messstrahles über das Messobjekt (Abscannen) werden flächige Bereiche mit dieser Tiefeninformation erfasst. Die ganzheitliche Erfassung des kritischen Bereiches erfordert eine Strahlablenkung in zwei Richtungen (x- und y-Richtung), wobei vorzugsweise der Strahlversatz in eine Richtung durch laterale Bewegung des Behälters relativ zum Messsystem realisiert wird. Bei der Messung wird ein tomographischer Datensatz erhalten, der Information über Vorhandensein und/oder Lage und/oder Größe von Fremdkörpern oder anderen Streuzentren im untersuchten Messbereich enthält. Die Ablenkung des Messstrahls wird vorzugsweise durch eine Strahlablenkung über bewegliche Spiegel und/oder durch Verfahren bzw. Verschieben der Optik zur Strahlformung realisiert.

Bei einer Realisierung des Messsystems als Full-Field-OCT-System wird das Licht der Lichtquelle ebenfalls in zwei Strahlanteile aufgeteilt, einen Messstrahl und einen Referenzstrahl. Der Messstrahl wird wiederum auf das Messobjekt gelenkt. Das vom Messobjekt zurück gestreute Licht wird mit dem Referenzlicht überlagert, das über einen Spiegel rückreflektiert wird, und mit einem Flächendetektor erfasst. Eine Messung liefert dabei eine flächige Information über die Streustruktur des Messobjektes. Durch Modulation der optischen Weglänge, die der Referenzstrahl durchläuft, vorzugsweise durch piezoelektrische Elemente oder optische Modulatoren, werden diese Flächeninformationen aus verschiedenen Tiefenbereichen erfasst und zu einem tomographischen Datensatz kombiniert, der wiederum Information über das Vorhandensein und/oder die Lage und/oder die Größe von Fremdkörpern oder anderen Streuzentren im Messbereich enthält.

In einer Ausgestaltung der Vorrichtung kann am Messmodul ein Reinigungssystem angebracht sein, mit dem das Messfenster automatisiert gereinigt werden kann. Dies kann bspw. über ein Druckluftsystem oder durch einen oder mehrere mechanische Abstreifer erfolgen, die über das Messfenster bewegt werden oder unter denen das Messfenster rotiert wird. In einer weiteren Ausgestaltung kann die Oberfläche des Messfensters hydrophil beschichtet sein, um eine gleichmäßige Verteilung von Flüssigkeiten auf der Fensteroberfläche zu erreichen. Eine weitere Ausgestaltung sieht eine hydrophobe Ausstattung der Oberfläche vor, um bspw. durch entsprechende Beschichtung Verunreinigungen abzuleiten. Das Fenster ist vorzugsweise gegenüber der Horizontalen geneigt angeordnet, um ein Abfließen/Abgleiten vorhandener Flüssigkeiten bzw. Verunreinigungen zu erreichen. Mit Ausnahme der hydrophilen und hydrophoben Beschichtung lassen sich alle Ausgestaltungen auch miteinander kombinieren. Ziel dieser Ausgestaltungen ist die Freihaltung des Messfensters von Verunreinigungen während des Einsatzes der Vorrichtung in einem industriellen Umfeld.

Bei der Vorrichtung wird der Spiegel, an dem der Referenzstrahl rückreflektiert wird, so gewählt, dass er der Geometrie des Behälters im interessierenden Messbereich entspricht, beispielsweise der Innenseite der unteren Behälterwand. Die Spiegelgeometrie entspricht dann der Geometrie des Behälterbodens. Dadurch wird der statische Tiefenmessbereich des OCT-Systems der Messkontur angepasst. Im Falle des Einsatzes eines Fourier-Domain-OCT-Systems ist dann die gleiche Technik zur Strahlablenkung, die den Messstrahl führt, auch im Referenzarm für den Referenzstrahl einzusetzen und dort synchron mit der Strahlablenkung des Messstrahls zu betreiben.

In einer weiteren Ausgestaltung der Vorrichtung ist das Messsystem mit einer nachführbaren Optik ausgestattet, die eine Nachführung bzw. Verschiebung des Fokusbereiches des Messstrahls ermöglicht. Dies kann bspw. durch ein Verfahren der Fokussieroptik realisiert werden. In dieser Ausgestaltung lässt sich der Messbereich durch entsprechende Nachführung des Fokusbereiches während des Abscannens ebenfalls der Kontur des Behältnisses, insbesondere der Innenseite des Behälterbodens, anpassen.

In einer weiteren Ausgestaltung sind die optischen Komponenten des Messsystems zur Erzeugung eines Bessel-Strahls als Messstrahl ausgestaltet, mit dem das Messobjekt vermessen wird. Durch die Realisierung des Messstrahls als Bessel-Strahl wird ein erweiterter Fokusbereich erreicht.

Das vorgeschlagene Verfahren eignet sich vor allem für die in der Beschreibungseinleitung genannten Anwendungen. So lassen sich bspw. befüllte Glasbehälter im medizinischen Bereich oder im Bereich der Nahrungsmittelindustrie mit dem vorgeschlagenen Verfahren vermessen, um eventuelle Fremdkörper in den Behältern zu detektieren. Das Verfahren ermöglicht dabei eine schnelle 100% Inline-Prüfung kritischer Bereiche von gefüllten Behältern auf das Vorhandensein von Fremdkörpern. Es kommt dabei keinerlei ionisierende oder schädliche Strahlung zum Einsatz. Mit dem Verfahren können Partikel unterschiedlicher Größe und Form sowie aus unterschiedlichen Materialien, z.B. aus Glas, Kunststoff, Gummi oder organischem Material, erfasst werden. Mit dem Verfahren können auch ungefüllte Behältnisse vermessen werden, bspw. Leergut vor der Befüllung, um darin Fremdkörper zu detektieren. Das Verfahren arbeitet berührungsfrei und reflektiv, so dass eine hervorragende Integration in Abfüllanlagen ermöglicht wird. Durch hohe Erkennungsraten und kleine Fehlerkennungsraten wird die Fehlausleitrate von Produkten minimiert, was zu ressourcenoptimierten und wirtschaftlichen Prozessen mit höchster Qualitätssicherheit führt. Eine weitere Anwendungsmöglichkeit des Verfahrens besteht in der Beurteilung der Qualität des Füllgutes oder der Behälterwand. So kann mit dem Verfahren die Homogenität und damit Qualität der Behälterwand vermessen werden, da detektierte Streuzentren in der Behälterwand deren Homogenität beeinträchtigen. Auch Streuzentren im Füllgut, insbesondere in einem viskosen Füllgut, können mit dem Verfahren erfasst und als Maß für die Qualität des Füllgutes herangezogen werden.

### Kurze Beschreibung der Zeichnungen

Das Verfahren wird nachfolgend anhand von Ausführungsbeispielen in Verbindung mit den Zeichnungen nochmals näher erläutert. Hierbei zeigen:
- Fig. 1: schematisch eine beispielhafte Anordnung einer Messvorrichtung zur Durchführung des vorgeschlagenen Verfahrens;
- Fig. 2: ein erstes Beispiel eines Messmoduls der Messvorrichtung in schematischer Darstellung; und
- Fig. 3: ein zweites Beispiel eines Messmoduls der Messvorrichtung in schematischer Darstellung.

### Wege zur Ausführung der Erfindung

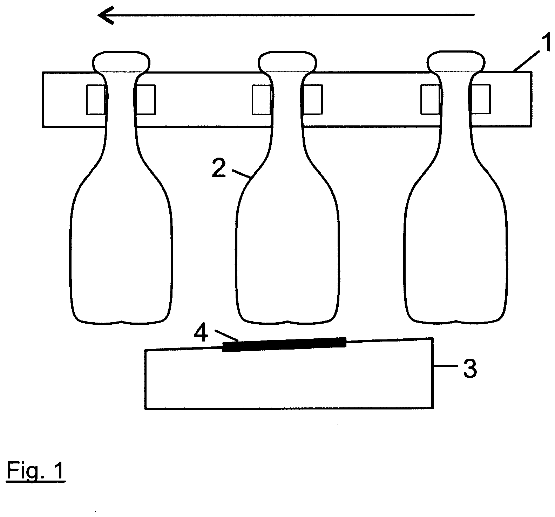

Die folgenden Ausführungsbeispiele zeigen eine Anordnung und beispielhafte Ausgestaltungen einer Messvorrichtung zur Durchführung des vorgeschlagenen Verfahrens anhand der Vermessung von flaschenartigen Behältern. In der Figur 1 ist hierzu ein Beispiel für die Anordnung des Messmoduls 3 der Messvorrichtung an einer Transporteinrichtung 1 zu erkennen, über die die Behälter 2 in Pfeilrichtung am Messmodul 3 der Messvorrichtung vorbei geführt werden. Eine derartige Transporteinrichtung 1 (bestehend aus Aktor und Halterung für die Behälter), von der in Figur 1 lediglich ein Abschnitt dargestellt ist, wird in Abfüllanlagen für den Transport der Behälter, bspw. von Getränkeflaschen, eingesetzt. Das Messmodul 3 wird hierbei unterhalb der Behälter 2 angeordnet und weist ein Messfenster 4 für den Durchtritt des Messstrahls auf.

Das Messmodul 3 dient in diesem Beispiel der Erfassung eines Volumenbereiches am Boden des Behältnisses 2 bzw. am Flaschenunterboden. Das Messmodul 3 beinhaltet eine Optik zur Strahlablenkung in eine Richtung senkrecht zur Zeichnungsebene. Das Messmodul ist so gestaltet, dass senkrecht zur Zeichnungsebene mittels optischer Kohärenztomographie flächige Informationen zum Bereich am Behälterboden erfasst werden. Räumliche Daten entstehen durch Fortbewegung der Behälter 2 über das Messmodul 3 mit Hilfe der Transporteinrichtung 1.

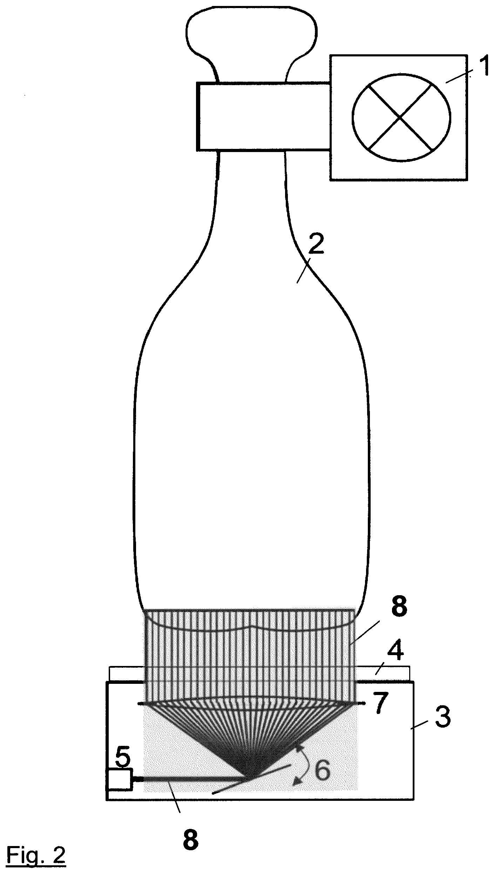

Figur 2 zeigt ein erstes Beispiel für die Ausgestaltung des Messmoduls 3 der Figur 1 in einer Ansicht in Transportrichtung der Behälter. In diesem Beispiel beinhaltet das Messmodul 3 eine Lichteinkopplung 5 für den Messstrahl, zum Beispiel durch einen fasergebundenen Kollimator oder eine Lichtfaser, einen hochfrequent rotierbaren Spiegel 6 zur Strahlablenkung und eine Optik 7 zur Strahlformung des Messstrahls 8. Der so geformte Messstrahl 8 wird durch das Messfenster 4 auf den Boden des Behälters 2 gerichtet.

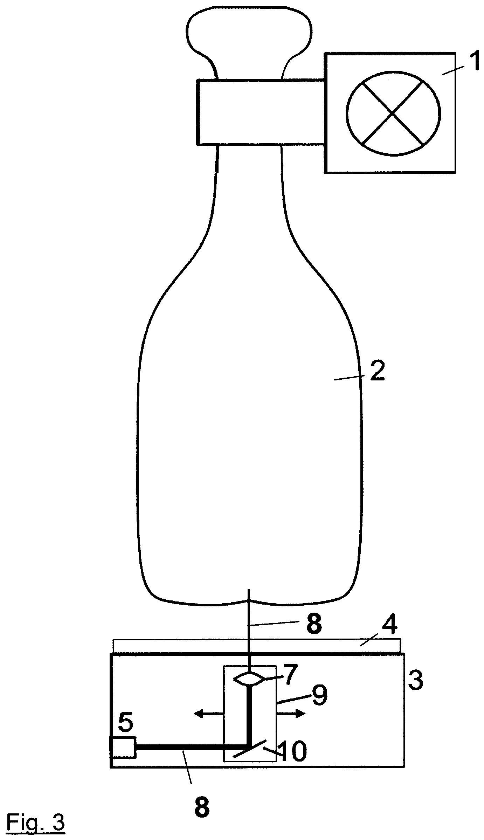

Figur 3 zeigt ein zweites Beispiel für die Ausgestaltung des Messmoduls 3 der Figur 1 in einer Ansicht in Transportrichtung der Behälter. In diesem Beispiel beinhaltet das Messmodul 3 neben dem Messfenster 4 und einer Lichteinkopplung 5 auch ein in Pfeilrichtung verschiebbares Modul 9 besitzen. Dieses Modul 9 besteht mindestens aus einer Optik 7 zur Strahlformung, kann zusätzlich aber auch derart gestaltet sein, dass zum Beispiel ein optisches Element zur Strahlführung, zum Beispiel ein Spiegel 10 oder eine Lichtfaser, enthalten ist.

### Bezugszeichenliste

- 1: Transporteinrichtung
- 2: Behälter
- 3: Messmodul
- 4: Messfenster
- 5: Lichteinkopplung
- 6: rotierbarer Spiegel
- 7: Strahlformungsoptik
- 8: Messstrahl
- 9: verschiebbares Modul
- 10: Umlenkspiegel

## Patentansprüche

1. Verfahren zur Detektion von Fremdkörpern oder anderen Streuzentren in Behältern (2), die eine Behälterwand aus einem optisch transparenten Material aufweisen,
bei dem mittels optischer Kohärenztomographie tomographische Daten wenigstens eines Volumenbereiches im Inneren der Behälter (2) aufgezeichnet werden, in denen die Fremdkörper oder Streuzentren erkennbar sind,
**dadurch gekennzeichnet,**
**dass** der Volumenbereich so gewählt wird, dass er wenigstens einen Bereich einer Innenseite der Behälterwand enthält, und
**dass** für die Durchführung der optischen Kohärenztomographie ein optisches Messsystem mit einem Messstrahl (8) und einem Referenzlichtstrahl eingesetzt wird, bei dem die reflektierende Oberfläche eines Referenzlichtspiegels, an dem der Referenzlichtstrahl reflektiert wird, die geometrische Form der Innenseite der Behälterwand im gewählten Volumenbereich aufweist.

2. Verfahren nach Anspruch 1,
**dadurch gekennzeichnet,**
**dass** der Volumenbereich so gewählt wird, dass er wenigstens einen Bereich einer Innenseite der unteren Behälterwand enthält.

3. Verfahren nach Anspruch 1 oder 2,
**dadurch gekennzeichnet,**
**dass** der Volumenbereich so gewählt wird, dass er der geometrischen Form der Innenseite der Behälterwand in dem gewählten Bereich folgt.

4. Verfahren nach einem der Ansprüche 1 bis 3,
**dadurch gekennzeichnet,**
**dass** die tomographischen Daten mit einem Fourier-Domain-OCT-System oder einem Full-Field-OCT-System aufgezeichnet werden.

5. Verwendung des Verfahrens nach einem der Ansprüche 1 bis 4 zur Inline-Detektion von Fremdkörpern bei der industriellen Abfüllung von Behältern mit einem Füllgut.

## Claims

1. Method for detecting foreign bodies or other scattering centres in containers (2) which have a container wall made from an optically transparent material,
in which tomographic data of at least one volume region in the interior of the containers (2) in which the foreign bodies or scattering centres are detectable are recorded by means of optical coherence tomography, **characterized in that** the volume region is selected such that it includes at least one area of an inside of the container wall, and
that an optical measuring system with a measuring beam (8) and a reference light beam is used for performing the optical coherence tomography, wherein the reflective surface of a reference light mirror on which the reference light beam is reflected has the geometric shape of the inside of the container wall in the selected volume region.

2. Method according to Claim 1, **characterized in that** the volume region is selected such that it includes at least one area of an inside of the lower container wall.

3. Method according to Claim 1 or 2, **characterized in that** the volume region is selected such that it follows the geometric shape of the inside of the container wall in the selected area.

4. Method according to any one of Claims 1 to 3, **characterized in that** the tomographic data are recorded with a Fourier domain OCT system or a full-field OCT system.

5. Use of the method according to any one of Claims 1 to 4 for in-line detection of foreign bodies in the industrial filling of containers with a filling material.

## Revendications

1. Procédé de détection de corps étranger ou d'autres centres de diffusion dans des récipients (2), qui présentent une paroi de récipient constituée d'un matériau transparent optiquement, dans lequel au moyen d'une tomographie par cohérence optique des données topographiques d'au moins une région volumique à l'intérieur du récipient (2) sont enregistrés, dans laquelle les corps étrangers ou les centres de diffusion peuvent être reconnus, **caractérisé en ce que** la région volumique est sélectionnée de telle sorte qu'elle contienne au moins une région d'un côté intérieur de la paroi de récipient, et **en ce que** pour la mise en oeuvre de la tomographie par cohérence optique un système de mesure optique avec un faisceau de mesure (8) et un faisceau lumineux de référence est employé, dans lequel la surface réfléchissante d'un miroir de lumière de référence, sur laquelle le faisceau de lumière de référence réfléchie, présente la forme géométrique du côté intérieur de la paroi de récipient dans la région volumique sélectionnée.

2. Procédé selon la revendication 1, **caractérisé en ce que** la région volumique est sélectionnée de telle sorte qu'elle contienne au moins une région d'un côté intérieur de la paroi de récipient inférieure.

3. Procédé selon la revendication 1 ou 2, **caractérisé en ce que** la région volumique est sélectionnée de telle sorte qu'elle suive la forme géométrique du côté intérieur de la paroi de récipient dans la région sélectionnée.

4. Procédé selon une des revendications 1 à 3, **caractérisé en ce que** les données topographiques sont enregistrées avec un système de tomographie par cohérence optique à domaine de Fourier ou un système de tomographie par cohérence optique plein champ.

5. Utilisation du procédé selon une des revendications 1 à 4, dans le cadre de la détection en ligne de corps étrangers lors du remplissage industriel de récipients avec une matière de remplissage.
